# EUROPÄISCHE PATENTANMELDUNG

(11) **EP 2 657 665 A1**
(43) Veröffentlichungstag der Anmeldung: **30.10.2013**
(21) Anmeldenummer: 12166054.2
(22) Anmeldetag: 27.04.2012
(51) Int. Cl.: G01G 19/03

(54) **Wägevorrichtung für Stückgut**

(71) Anmelder: Umicore AG & Co. KG, 63403 Hanau (DE)
(72) Erfinder: Gempp, Joachim, 79395 Neuenburg (DE)

(57) **Zusammenfassung**

Wägevorrichtung für Stückgut, welches einen Bandförderer und mindestens eine unterhalb des Bandförderers angeordnete Waage (301) mit einer Auflage für das Wägegut aufweist (303), wobei die Waage starr angeordnet ist, der Bandförderer mindestens zwei Transportbänder (345) aufweist, die Auflage für das Wägegut mit mindestens einer Auflageverlängerungen (307) versehen ist, die zwischen den Transportbändern des Bandförderers hindurchgeführt werden können und die Transportbänder des Bandförderers zumindest teilweise derart zur Waage hin bewegt werden können, so dass die Auflageverlängerungen ohne eigene Bewegung zwischen den Transportbändern hindurchgeführt werden und auf den Transportbändern bewegtes Stückgut auf den Auflageverlängerungen aufgelegt und durch die Waage gewogen werden kann.

## Beschreibung

Wägevorrichtungen für auf Bandförderern bewegtes Stückgut sind prinzipiell bekannt.

Bei allen bekannten Lösungen treten allerdings zahlreiche Probleme auf. So ist oft eine definierte und möglichst genaue Steuerung der Fördergeschwindigkeit notwendig. Durch das verbreitete vollständige oder teilweise Mitwiegen des Bandförderers und die damit verbundenen hohe Grundlast sind nur Waagen geeignet, die ausreichend hohe Massen bestimmen können und daher in ihrer Genauigkeit und Vielseitigkeit eingeschränkt sind. Außerdem erfordert die Empfindlichkeit gegen äußere Störeinflüsse bei den jeweiligen Konstruktionen eine Einhausung mit großem Platzbedarf und besitzen durch die langen Beruhigungs- und Tarierzeiten der Waagen lange Zykluszeiten.

Es war die Aufgabe, diese Mängel des Standes der Technik zu beheben. Die Aufgabe wird gelöst durch einen Wägevorrichtung für Stückgut, welches einen Bandförderer und mindestens eine unterhalb des Bandförderers angeordnete Waage mit einer Auflage für das Wägegut aufweist, wobei die Waage starr montiert ist, der Bandförderer mindestens zwei Transportbänder aufweist, die Auflage für das Wägegut mit mindestens einer Auflageverlängerungen versehen ist, die zwischen den Transportbändern des Bandförderers hindurchgeführt werden können und die Transportbänder des Bandförderers zumindest teilweise derart zur Waage hin bewegt werden können, so daß die Auflageverlängerungen ohne eigene Bewegung zwischen den Transportbändern hindurchgeführt werden und auf den Transportbändern bewegtes Stückgut auf den Auflageverlängerungen aufgelegt und durch die Waage gewogen werden kann.

### Kurze Beschreibung der Erfindung

1. Wägevorrichtung für Stückgut, welches einen Bandförderer und mindestens eine unterhalb des Bandförderers angeordnete Waage mit einer Auflage für das Wägegut aufweist, wobei die Waage starr angeordnet ist, der Bandförderer mindestens zwei Transportbänder aufweist, die Auflage für das Wägegut mit mindestens einer Auflageverlängerungen versehen ist, die zwischen den Transportbändern des Bandförderers hindurchgeführt werden können und die Transportbänder des Bandförderers zumindest teilweise derart zur Waage hin bewegt werden können, so daß die Auflageverlängerungen ohne eigene Bewegung zwischen den Transportbändern hindurchgeführt werden und auf den Transportbändern bewegtes Stückgut auf den Auflageverlängerungen aufgelegt und durch die Waage gewogen werden kann.
2. Wägevorrichtung nach Punkt 1, wobei die oberhalb der Waage angeordnete Bandfördereinheit zur Waage hin bewegt werden kann.
3. Wägevorrichtung nach Punkt 1 oder 2, welche eine Mehrzahl an Auflageverlängerungen aufweist.
4. Wägevorrichtung nach nach einem oder mehreren der Punkte 1 bis 3, welche eine Mehrzahl an Transportbändern aufweist.
5. Wägevorrichtung nach einem oder mehreren der Punkte 1 bis 4, wobei die Auflageverlängerungen in zwei oder drei quer zur Förderichtung des Bandförderers verlaufenden Reihen angeordnet sind.
6. Wägevorrichtung nach einem oder mehreren der Punkte 1 bis 5, wobei der Bandförderer zwei bis zwanzig Förderbänder aufweist.
7. Wägevorrichtung nach einem oder mehreren der Punkte 1 bis 6, wobei die Endlagen der Bewegung des Bandförderers gedämpft werden.
8. Wägevorrichtung nach Punkt 7, wobei die Dämpfung mechanisch oder elektronisch erfolgt.
9. Wägevorrichtung nach Punkt 7 oder 8, wobei die Dämpfung mechanisch über eine Exzenterscheibe erfolgt.
10. Wägevorrichtung nach einem oder mehreren der Punkte 1 bis 9, wobei die Bewegung des Bandförderers durch einen hydraulischen, pneumatischen oder elektrischen Aktuator erfolgt.
11. Wägevorrichtung nach einem oder mehreren der Punkte 1 bis 10, wobei die Wägevorrichtung einen Sensor zur Detektion des transportierten Stückguts auf dem Bandförderer und der Anordnung über den Auflageverlängerungen aufweist.
12. Wägevorrichtung nach einem oder mehreren der Punkte 1 bis 11, wobei die Hubbewegung geführt wird, insbesondere durch eine Führung ausgewählt aus der Gruppe bestehend aus Kugelführung, Reibführung, Säulenkugelführung und deren Kombinationen.
13. Wägevorrichtung nach einem oder mehreren der Punkte 1 bis 12, wobei die Wägevorrichtung zwei, drei oder vier Waage aufweist.
14. Wägevorrichtung nach einem oder mehreren der Punkte 1 bis 13, wobei die Waage eingehaust und gegen Störeinflüsse geschützt ist.
15. Wägevorrichtung nach einem oder mehreren der Punkte 1 bis 14, wobei der Bandförderer einen oder mehrere Führungsschienen zur korrekten Zuführung des zu wägenden Stückguts aufweist.
16. Verfahren zur Wägung von Stückgut mit einer Vorrichtung nach einem der vorstehenden Patentansprüche mit den Schritten
   - Transportieren des zu wägenden Stückguts bis zu einer geeigneten Position über den Auflageverlängerungen;
   - Stoppen des Bandförderers;
   - Absenken des Stückguts auf die Auflageverlängerungen durch Verringerung der Spannung der Transportbänder oder durch zumindest teilweises Absenken des Bandförderers;
   - Feststellen des Gewichts des Stückguts durch dessen Krafteinwirkung auf eine Waage;
   - Anheben des Stückguts von den Auflageverlängerungen durch Erhöhen der Spannung der Transportbänder oder durch zumindest teilweises Anheben des Bandförderers;
   - Abtransportieren des Stückguts.
17. Verfahren zur Wägung von Stückgut nach Punkt 16, wobei das Stückgut ein Autoabgaskatalysator, ein Monolith zur Herstellung eines Autoabgaskatalysators, deren Vorprodukt, eine Verpackung aus Karton, Kunststoff, Metall oder deren Kombinationen oder ein Behälter für Nahrungsmittel ist.
18. Verwendung der Wägevorrichtung nach einem oder mehreren der Punkte 1 bis 15 in einem Verfahren zur Herstellung von Autoabgaskatalysatoren.

### Detaillierte Beschreibung der Erfindung

Die Wägevorrichtung ist zur Wägung von Stückgut konzipiert, wobei als Stückgut im Prinzip alle einzelnen Waren oder Werkstücke umfasst sind, die einer Wägung bedürfen. Dies können Autoabgaskatalysatoren und deren Substrate sein, Flaschen oder Konservendosen vor und/oder nach dem Befüllen und dergleichen.

Diese werden auf einem oder mehreren Bandförderern bewegt, wobei diese Güter an verschiedenen Bearbeitungsstationen beliebigen weiteren Verfahrensmaßnahmen unterworfen werden, wobei Befüllen, Beschichten, Auspumpen oder Schleifen, Schweißen und Reinigen nur beispielhaft genannt werden.

Die Wägevorrichtung weist einen Bandförderer und mindestens eine unterhalb des Bandförderers angeordnete Waage auf. Bei der Waage kann es sich um einen oder mehrere handelsübliche Waagen handeln, die üblicherweise mit einer Auflage für das Wägegut versehen sind.

Bei der Konstruktion der Wägevorrichtung ist die Waage starr montiert, das heißt, daß die Waage zur Ausführung des Wägevorgangs nicht bewegt wird. Der Bandförderer weist mindestens zwei Transportbänder auf, alternativ können allerdings auch zwei getrennte Bandförderer verwendet werden. Die Auflage für das Wägegut ist mit mindestens einer Auflageverlängerungen versehen ist, die zwischen den Transportbändern des Bandförderers oder der Bandförderer hindurchgeführt werden können.

Damit ist ersichtlich, daß die Verwendung zweier Bandförderer zwar möglich ist, aber durch die damit bedingte kompliziertere Konstruktion nur dann angewendet werden solle, wenn es unbedingt erforderlich ist, wie z.B. der Größe des zu wiegenden Stückgutes.

Die Auflageverlängerungen können beispielsweise eines oder mehrere Stegbleche sein, welche durch den Zwischenraum zwischen den Transportbändern hindurchgeführt werden können. Es können aber auch zylinder- bzw. stabförmige Verlängerungen eingesetzt werden oder beliebige andere Formen zur Anwendung kommen.
Durch diese Konstruktion wird vermieden, daß der Bandförderer ganz oder teilweise mit gewogen werden muß, so daß die Grundlast der Waage verringert wird. Je nach Größe und Form der Auflageverlängerungen kann nicht nur eine einzelne, sondern eine Mehrzahl an Auflageverlängerungen verwendet werden. Auf diese Weise kann verhindert werden, daß das zu wiegende Stückgut nur einseitig angehoben wird und umfällt oder aber kleinteiliges Stückgut an den Auflageverlängerungen vorbeigeführt wird, was beides eine Wägung verhindert. Gut bewährt haben sich 1 bis 20, oder 3 bis 15 oder 5 bis 12 Auflageverlängerungen. Es ist ersichtlich, daß nur so viele Auflageverlängerungen in einer Reihe senkrecht zur Förderrichtung des Bandförderers angeordnet werden können wie es Zwischenräume zwischen den Transportbändern gibt, womit die Anzahl der Transportbänder im Zusammenhang mit den nebeneinander angeordneten Auflageverlängerungen steht. Es kann daher auch eine Mehrzahl an Transportbändern verwendet werden, wobei meist 2 bis 20, oder 3 bis 16 oder 4 bis 12 oder 6 bis 10 für die meisten Anwendungen ausreichend sind.

Die Auflageverlängerungen können in mehreren Reihen quer zur Förderrichtung des Bandförderers angeordnet werden. Hierbei haben sich im Allgemeinen 1 bis 5 Reihen oder 2 bis 4, wie 3 bis 4 Reihen, bewährt. Somit kann die Wägevorrichtung durch die Anzahl und Breite der Transportbänder, die Anzahl der Reihen der Auflageverlängerungen und die Anzahl der Auflageverlängerungen an eine große Anzahl von verschiedenen Stückgütern angepasst werden.

Die Transportbänder des Bandförderers können zumindest teilweise derart zur Waage hin bewegt werden, so daß die Auflageverlängerungen ohne eigene Bewegung zwischen den Transportbändern hindurchgeführt werden und auf den Transportbändern bewegtes Stückgut auf den Auflageverlängerungen aufgelegt und durch die Waage gewogen werden kann.

Durch diese Konstruktion wird die Waage vom Bandförderer mechanisch getrennt, wodurch mit geringem Aufwand die durch den Betrieb des Bandförderers verursachten Störeinflüsse reduziert und das Mitwiegen des Bandförderers vermieden werden.

Die Bewegung der Transportbänder zur Waage hin dient dem Ablegen des Stückgutes auf den Auflageverlängerungen der Waage, so daß das Stückgut gewogen werden kann. Je nach Konstruktion des Bandförderers können die Transportbänder getrennt von der restlichen Konstruktion des Bandförderers abgesenkt werden, beispielsweise durch eine Reduzierung der Spannung der Transportbänder, oder aber Absenken der gesamten Bandfördererkonstruktion. Je nach dem wo die Waage und die Auflageverlängerungen angeordnet sind kann es genügen, nur einen Teil, wie ein Ende des Bandförderers, so weit abzusenken um das Stückgut auf den Auflageverlängerungen abzulegen, was besonders bei sehr langen Bandförderern mit einer Wägung an mindestens einem der Enden praktikabel sein kann. Bei kompakten Wägevorrichtungen, bei welchen die Länge des Bandförderers nur wenig größer ist als die Länge der Waage und der Auflageverlängerungen ist ein Absenken der Transportbänder oder des Bandförderers auf ganzer Länge oft zweckmäßig. Der Betrag der Absenkung richtet sich nach dem verwendeten Stückgut und den konstruktiven Einzelheiten der Wägevorrichtung. Eine Absenkung (und Wiederanhebung) um 3 mm bis 30 mm, inspesondere 5 bis 20 mm oder um 8 bis 12 mm hat sich in der Praxis bewährt. Die Hubbewegung kann vorteilhaft geführt werden. Dies kann durch im Allgemeinen bekannte und erprobte Bauteile geschehen, insbesondere durch Kugelführungen, Reibführungen, Säulenkugelführungen sowie deren Kombinationen. Derartige Bauteile sind als leichtgängig und stabil bekannt und beispielsweise als NSK- oder INA-Kugellager und Führungsprofile, als Führungsschiene, oder NSK/ INA-Führungswagen bekannt und kommerziell erhältlich.

In einer spezifischen Ausgestaltung wird der gesamte Bandförderer abgesenkt.

Wird insbesondere der Bandförderer abgesenkt, so kann dies durch verschiedene Aktuatoren bewirkt werden. Geeignet sind beispielsweise pneumatische, hydraulische oder auch elektrische Aktuatoren geeignet.

In einer spezifischen Ausgestaltung der Wägevorrichtung ist der Bandförderer beweglich auf einer schiefen Führung gelagert und wird zum Absenken horizontal bewegt, woraus durch die schiefe Führung auch eine Vertikalbewegung resultiert.

In einer weiteren spezifischen Ausführung ist die Endlage des Bandförderers beim Absenken gedämpft. Die Dämpfung kann, je nach Art des Aktuators, eine mechanische oder elektronische Dämpfung sein, wobei Letztere eine Dämpfung über eine elektronische Beeinflussung der Bewegung eines elektrischen Aktuators zu verstehen ist, also beispielsweise der Drehgeschwindigkeit eines Elektromotors oder der Regulierung der Bewegung eines magnetischen Aktuators, was beispielsweise über die Kontrolle der zugeführten elektrischen Spannung bewirkt werden kann.

Die Dämpfung kann unabhängig von der Art des Aktuators auch mechanisch erfolgen. In einer spezifischen Ausgestaltung der Erfindung erfolgt die mechanische Dämpfung über eine Exzenterscheibe. Bei dieser Ausführung kann zum Beispiel ein pneumatischer oder hydraulischer Aktuator, wie ein Pneumatikzylinder, über einen Umlenkhebel mit einer Welle verbunden sein, die mindestens eine Exzenterscheibe aufweist. Diese Exzenterscheibe bewirkt die Absenkung und die Anhebung des Bandförderers.

Die Dämpfung hat den technischen Effekt, den Endlagenstoß des Stückguts beim Absenken zu minimieren, so daß auch bei raschem Absenken bzw. Anheben die Beruhigungszeit bzw. Tarierzeit der Waage nicht erforderlich ist oder minimiert wird.

Da Waage und Bandförderer mechanisch voneinander getrennt sind, die Waage also nicht von Bewegungen des Bandförderers beeinflusst werden, wird die Waage auch beim Hindurchführen der Auflageverlängerungen nicht bewegt, da dies ausschließlich durch die Bewegung der Transportbänder oder des Bandförderers bewirkt wird. Außerdem wird weder durch den Betrieb des Bandförderers noch dessen Bewegen die Messung störend beeinflusst. Auch die Fördergeschwindigkeit des Bandes hat keinen Einfluß auf das Messergebnis. Die Trennung von Waage und Bandförderer hat außerdem den Effekt, daß der Bandförderer nicht auf der Waage aufliegt, nicht mitgewogen wird und daher eine geringere Vorlast der Waage auftritt. Daher können auch Waagen mit hoher Genauigkeit, aber engeren Meßbereichen eingesetzt werden, wodurch verbesserte Meßgenauigkeiten erreichbar sind. Zur Verbreiterung des Meßbereiches können dann mehrere Waagen eingesetzt werden, die beispielsweise übereinander angeordnet werden können. Sind die Waagen mit einem mechanischen Überlastschutz versehen, so können diese einfach aufeinander gestellt werden. Zur Erweiterung des Wägebereiches sind meist zwei, drei oder auch vier aufeinander gestellte Waagen ausreichend. Auf diese Weise ist die Bereitstellung einer Wägevorrichtung möglich, die Stückgut im Bereich von 0,1 Kg bis 60 Kg wiegen kann. Es ist ebenfalls möglich, daß eine solche Wägevorrichtung im Bereich von 0,1 Kg bis 6 Kg mit einer Gewichtstoleranz von +/- 0,2 g und im Bereich von 6 Kg bis 60 Kg mit einer Gewichtstoleranz von +/- 2 g arbeitet. Es können mit einer derartigen Wägevorrichtung also ohne Umbau oder konstruktive Änderungen Stückgüter mit sehr unterschiedlichem Gewicht gewogen werden. Zum Schutz der Waage oder Waagen vor äußeren Störeinflüssen wie zum Beispiel Zugluft oder Verunreinigung können die Waagen in der Wägevorrichtung eingehaust werden.

Zur automatischen Wägung kann zweckmäßig auch einen Sensor zur Detektion bzw. Ortsbestimmung des transportierten und zu wägenden Stückguts auf dem Bandförderer angeordnet sein, der die korrekte Anordnung über den Auflageverlängerungen sicherstellt. Als Sensor geeignet können beispielsweise eine Kamera, eine Anordnung einer oder mehrerer Lichtschranken oder kapazitive Sensoren dienen, um die Position des Stückgutes zu bestimmen oder zu detektieren, wenn es korrekt über den Auflageverlängerungen angeordnet ist.

Es ist ebenfalls möglich durch Führungsschienen eine korrekte Zuführung des zu wägenden Stückguts sicherzustellen.

Die Wägung wird wie folgt durchgeführt. Das zu wägende Stückgut wird durch den Bandförderer transportiert und sobald es eine geeignete Position über den Auflageverlängerungen erreicht hat wird der Bandförderer gestoppt, so daß das Stückgut über den Auflageverlängerungen angeordnet ist, jedoch noch immer von den Transportbändern getragen wird und auf diesen aufliegt. Dann wird der Aktuator aktiviert, welcher entweder durch Verringerung der Spannung der Transportbänder oder durch Absenken des Bandförderers bewirkt, daß das Stückgut abgesenkt und auf den Auflageverlängerungen abgesetzt wird, wodurch die Auflageverlängerungen die Krafteinwirkung des Stückguts auf die Waage übertragen. Anschließend ist oft eine geringe Wartezeit von wenigen Sekunden erforderlich, insbesondere 0,5 bis 10, oder 1 bis 7, oder 2 bis 5 Sekunden. Nach Feststellen des Gewichts an der Waage ist die Wägung beendet und der Aktuator wird erneut betätigt und hebt den Bandförderer an bzw. erhöht die Spannung der Transportbänder, so daß das Stückgut wieder auf den Transportbändern aufliegt. Durch Anlaufen des Bandförderers wird das gewogene Stückgut abtransportiert. Vorteilhaft ist die Bewegung des Absenkens des Stückgutes auf die Auflageverlängerungen gedämpft, das bedeutet, die Bewegung ist zu Beginn schneller als unmittelbar vor dem Aufsetzen. Hierdurch wird der Stoß auf die Waage reduziert, wodurch die Wägung schneller abgeschlossen ist. Die Erfindung betrifft daher auch ein Verfahren zur Wägung von Stückgut mit einer Vorrichtung nach einem der vorstehenden Patentansprüche mit den Schritten
- Transportieren des zu wägenden Stückguts bis zu einer geeigneten Position über den Auflageverlängerungen;
- Stoppen des Bandförderers;
- Absenken des Stückguts auf die Auflageverlängerungen durch Verringerung der Spannung der Transportbänder oder durch zumindest teilweises Absenken des Bandförderers;
- Feststellen des Gewichts des Stückguts durch dessen Krafteinwirkung auf eine Waage;
- Anheben des Stückguts von den Auflageverlängerungen durch Erhöhen der Spannung der Transportbänder oder durch zumindest teilweises Anheben des Bandförderers;
- Abtransportieren des Stückguts.

Als Stückgut können Verfahren ein Autoabgaskatalysator, ein Monolith zur Herstellung eines Autoabgaskatalysators, deren Vorprodukte oder ein Behälter für Nahrungsmittel verwendet werden, wie z.B. Konservendosen, Kunststoffbecher oder-schalen sowie Schachteln. Auch Verpackungen aus Karton, Kunststoff, Metall oder deren Kombinationen für beliebige Zwecke können mit der Wägevorrichtung vorteilhaft gewogen werden, beispielsweise um bei der Befüllung die Füllmenge zu regeln oder das Gewicht aus anderen Gründen zu bestimmen.

Die Erfindung betrifft außerdem die Verwendung der Wägevorrichtung in einem Verfahren zur Herstellung von Autoabgaskatalysatoren. Hierzu kann die Wägevorrichtung gut eingesetzt werden in Verfahren zur Herstellung von Autoabgaskatalysatoren, in denen zur Qualitätssicherung oder zur Kontrolle der Beschichtungsmenge im Herstellungsprozeß Autoabgaskatalysatoren oder deren Vorprodukte, wie z.B. unbeschichtete Monolithe zur Herstellung von Autoabgaskatalysatoren gewogen werden. Solche Verfahren sind beispielsweise beschrieben in EP-A-1620200, EP-A-1817107, US 3959520 oder US 4208454, worauf Bezug genommen wird.

### Beschreibung der Zeichnungen

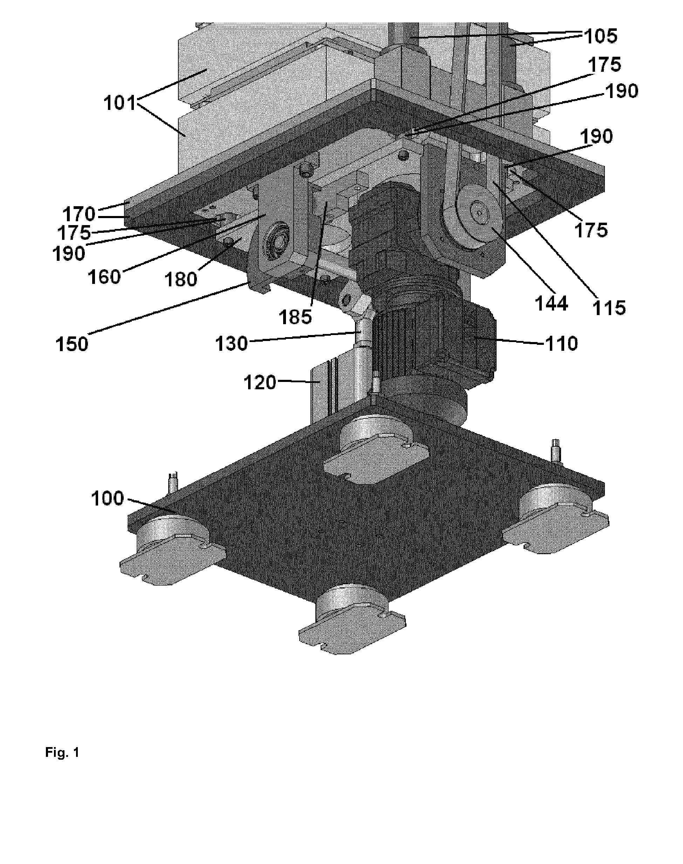

Figur 1 zeigt einen Teil der Wägevorrichtung mit einer Bodenplatte 100, auf welcher der Aktuator 120 befestigt ist. Der Aktuator 120 bewegt über ein Hebelsystem 130 die Exzenterscheibe 150, welche im Lager 160 drehbar gelagert ist. Das Lager 160 wird im Betrieb selbst nicht auf-oder abwärts bewegt. In der Exzenterscheibe 150 wird die Führung 185 der Trageplatte 180 bewegt. Wird also die Exzenterscheibe 150 gedreht, so bewegt sich die Trageplatte 180 auf oder ab. An der Trageplatte 180 ist außerdem der Antriebsmotor 110 befestigt, der über die Treibrolle 144 den Antriebsriemen 115 und die Transportbänder des Bandförderers antreibt. An der Trageplatte 180 sind außerdem die Verbindungselemente 190 befestigt, welche die Trageplatte 180 mit dem nicht abgebildeten Bandförderer verbinden. Die Verbindungselemente sind durch Öffnungen 175 in der Halteplatte 170 hindurchgeführt. Die Halteplatte 170 ist relativ zur Bodenplatte unbeweglich montiert, an ihrer Unterseite sind die Lager 160 befestigt, auf ihrer Oberseite sind die Waagen 101 angeordnet. In der Abbildung sind auf der Halteplatte 170 auch die Führungen 105 für die Verbindungselemente 190 montiert, in welchen die Verbindungselemente gelagert sind. Die Halteplatte 170 bewegt sich während des Betriebs nicht und kann beispielsweise durch Streben, Stützen oder ein Gehäuse starr mit der Bodenplatte 100 verbunden sein.

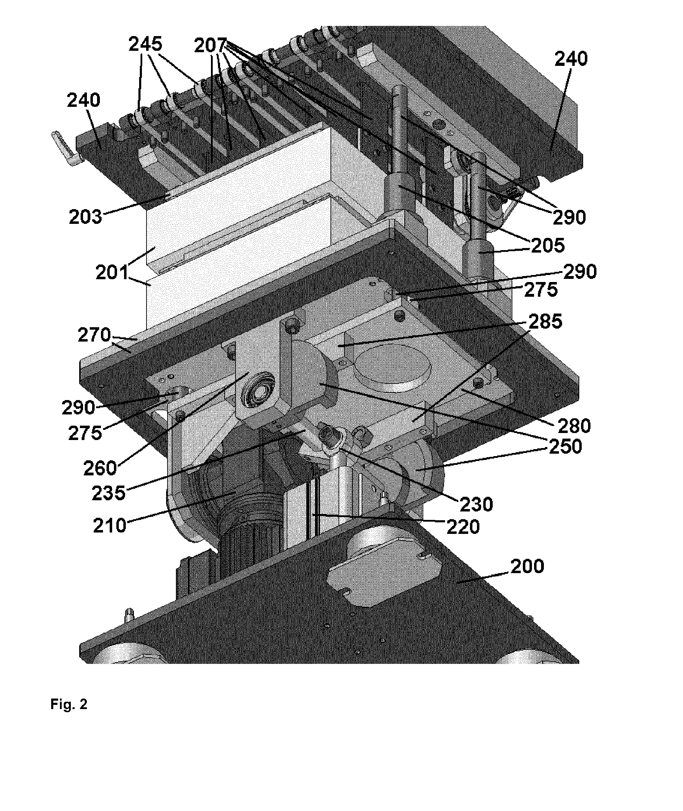

Figur 2 zeigt die Wägevorrichtung aus einer anderen Perspektive. Wie in Figur 1 sind die Bodenplatte 200 abgebildet, an welcher der Aktuator 220 befestigt ist. Das dargestellte Hebelsystem 230 dreht die an der Achse 235 montierten Exzenterscheiben 250, die im Lager 260 gehalten werden. Die Führungen 285 werden von den Exzenterscheiben 250 bewegt und sind mit der Trageplatte 280 verbunden, an welcher der Antriebsmotor 210 für die Transportbänder 245 des Bandförderers befestigt ist. An der Trageplatte sind außerdem die Verbindungselemente 290 mit ihrer Unterseite befestigt, welche durch die Öffnungen 275 in der Halteplatte 270 hindurchragen und von den auf der Halteplatte 270 montierten Führungen 205 geführt werden. Die Verbindungselemente 290 sind mit ihrem oberen Ende mit dem Körper des Bandförderers 240 verbunden. Auf der Halteplatte 270 sind die Waagen 201 übereinander angeordnet. Auf der Auflagefläche 203 der oberen Waage sind Auflageverlängerungen 207 montiert, die durch Öffnungen im Körper des Bandförderers 240 hindurchgeführt sind.

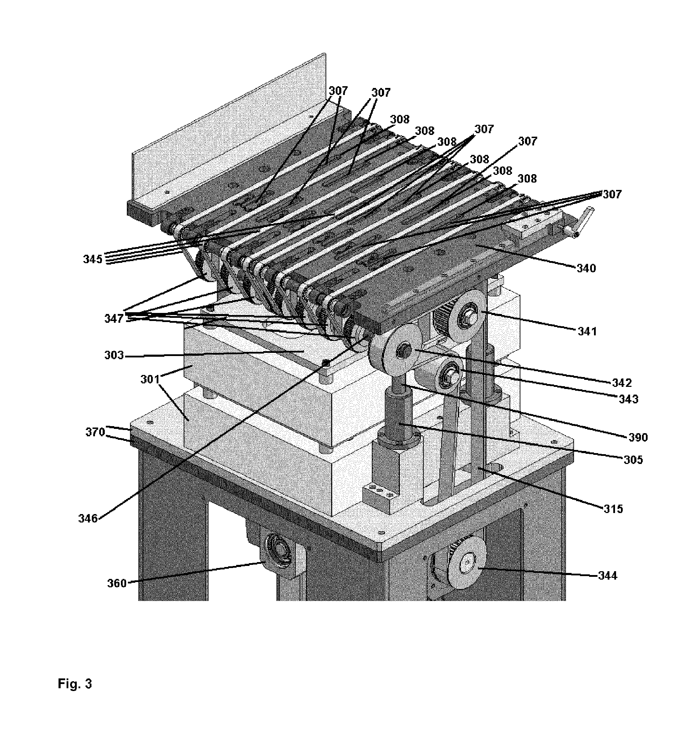

Figur 3 zeigt die Wägevorrichtung aus einer anderen Perspektive. Zwei Waagen 301 sind auf der Halteplatte 370 angeordnet, an welcher das Lager 360 der Exzenterscheibe befestigt ist. Der Motor treibt über die Treibrolle den Antriebsriemen 315 an, der über eine Führungsrolle 341 und eine Spannrolle 343 geführt ist und über eine Antriebsrolle 342 die Transmissionsachse 346 antreibt, die mehrere Transmissionsrollen 347 aufweist, welche jeweils eines der Transportbänder 345 des Bandförderers antreiben. Der Körper des Bandförderers 340 weist Öffnungen 308 auf, in welchen sich die Auflageverlängerungen 307 befinden, die auf der Auflagefläche 303 der Waagen 301 aufliegen. Entlang dieser Auflageverlängerungen 307 wird beim Wägevorgang der Körper des Bandförderers 340 abgesenkt. Hierbei bewegen sich die mit dem Körper des Bandförderers 340 verbundenen Verbindungselemente 390, geführt durch die Führungen 305, nach unten.

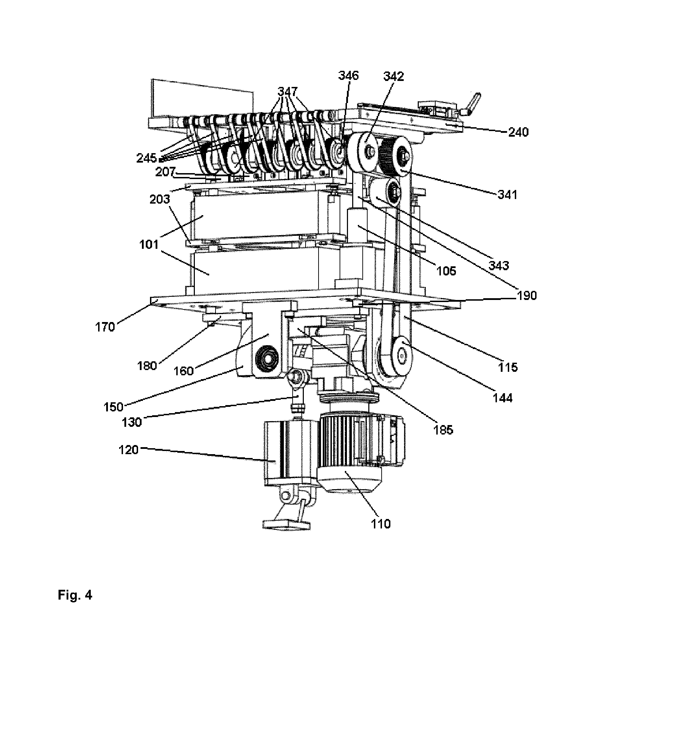

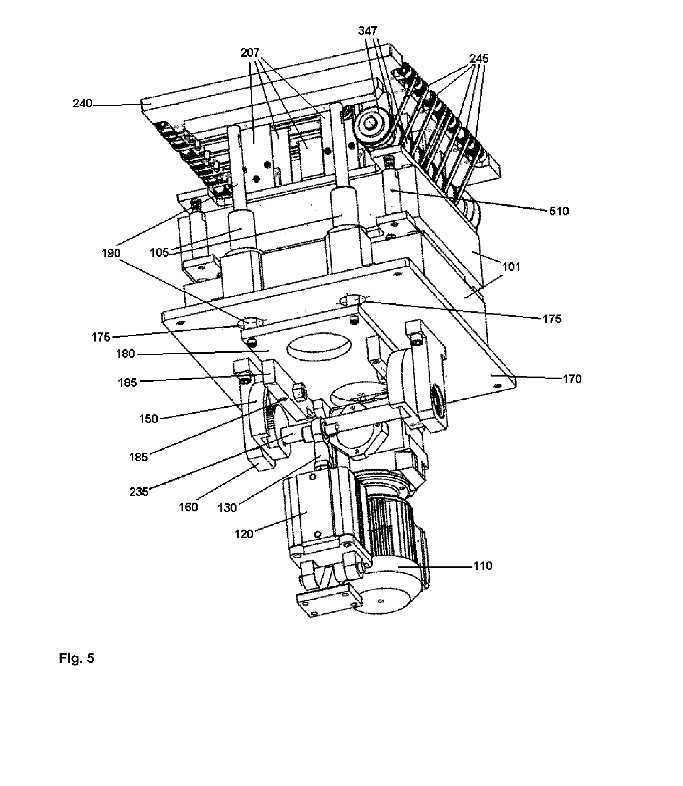

Figuren 4 und 5 zeigen die Wägevorrichtung in einer ähnlichen Perspektive wie die Figuren 1 und 2, jedoch ohne Gehäuseteile und aus einem anderen Blickwinkel.

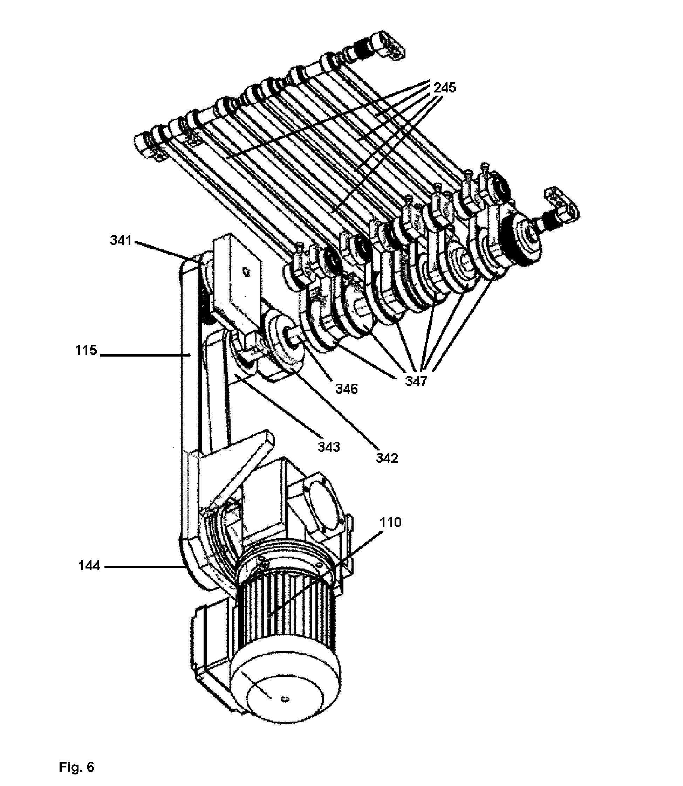

Figur 6 zeigt den beweglichen Bandförderer ohne die anderen Teile der Wägevorrichtung und ohne den Körper des Bandförderers 240.

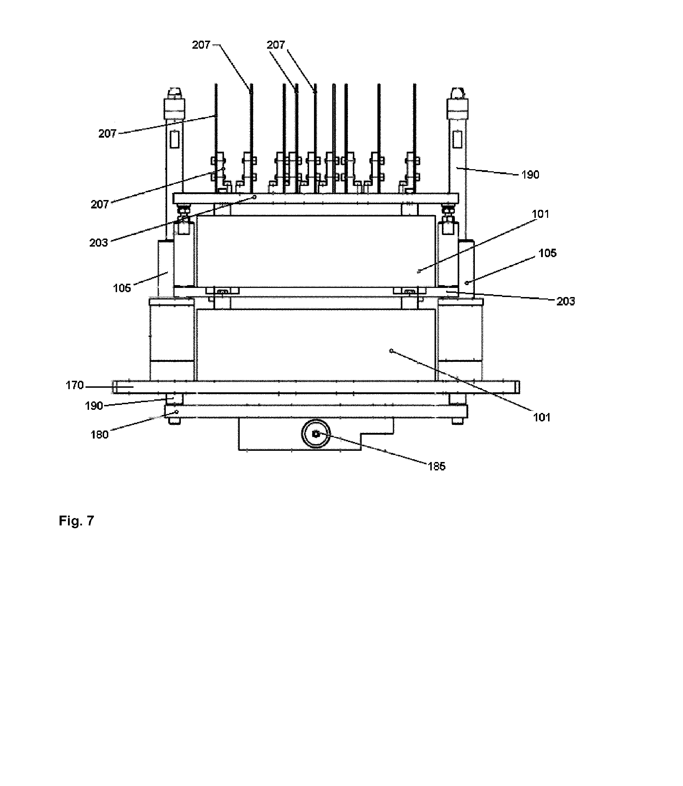

Figur 7 zeigt die Wägevorrichtung ohne den Bandförderer und ohne den Körper des Bandförderers 240, aber mit Teilen der Mechanik zum Heben und Senken des Bandförderers.

Die Bezugszeichen der Figuren 4 bis 7 sind mit den Bezugszeichen der Figuren 1 bis 3 identisch.

Liste der Bezugszeichen:
Bodenplatte 100, 200
Waage(n) 101, 201, 301
Auflagefläche der Waage(n) 203, 303
Führungen für Verbindungselemente 105, 205, 305
Auflageverlängerung 207, 307
Öffnungen im Körper des Bandförderers 308
Antriebsmotor 110
Antriebsriemen 115, 315
Aktuator 120, 220
Hebelsystem 130, 230
Achse 235
Körper des Bandförderers 240, 340
Führungsrolle 341
Antriebsrolle 342
Spannrolle 343
Treibrolle 144
Transportbänder des Bandförderers 245, 345
Transmissionsachse 346
Transmissionsrollen 347
Exzenterscheibe 150, 250
Lager 160, 260, 360
Halteplatte 170, 270 , 370
Öffnungen für Verbindungselemente 175, 275
Trageplatte 180, 280
Führung der Trageplatte 185, 285
Verbindungselemente 190, 290, 390

## Patentansprüche

1. Wägevorrichtung für Stückgut, welches einen Bandförderer und mindestens eine unterhalb des Bandförderers angeordnete Waage mit einer Auflage für das Wägegut aufweist, wobei die Waage starr angeordnet ist, der Bandförderer mindestens zwei Transportbänder aufweist, die Auflage für das Wägegut mit mindestens einer Auflageverlängerungen versehen ist, die zwischen den Transportbändern des Bandförderers hindurchgeführt werden können und die Transportbänder des Bandförderers zumindest teilweise derart zur Waage hin bewegt werden können, so daß die Auflageverlängerungen ohne eigene Bewegung zwischen den Transportbändern hindurchgeführt werden und auf den Transportbändern bewegtes Stückgut auf den Auflageverlängerungen aufgelegt und durch die Waage gewogen werden kann.

2. Wägevorrichtung nach Anspruch 1, wobei die oberhalb der Waage angeordnete Bandfördereinheit zur Waage hin bewegt werden kann.

3. Wägevorrichtung nach Anspruch 1 oder 2, welche eine Mehrzahl an Auflageverlängerungen aufweist.

4. Wägevorrichtung nach nach einem oder mehreren der Ansprüche 1 bis 3, welche eine Mehrzahl an Transportbändern aufweist.

5. Wägevorrichtung nach einem oder mehreren der Ansprüche 1 bis 4, wobei die Auflageverlängerungen in zwei oder drei quer zur Förderichtung des Bandförderers verlaufenden Reihen angeordnet sind.

6. Wägevorrichtung nach einem oder mehreren der Ansprüche 1 bis 5, wobei der Bandförderer zwei bis zwanzig Förderbänder aufweist.

7. Wägevorrichtung nach einem oder mehreren der Ansprüche 1 bis 6, wobei die Endlagen der Bewegung des Bandförderers gedämpft werden.

8. Wägevorrichtung nach Anspruch 7, wobei die Dämpfung mechanisch oder elektronisch erfolgt.

9. Wägevorrichtung nach Anspruch 7 oder 8, wobei die Dämpfung mechanisch über eine Exzenterscheibe erfolgt.

10. Wägevorrichtung nach einem oder mehreren der Ansprüche 1 bis 9, wobei die Bewegung des Bandförderers durch einen hydraulischen, pneumatischen oder elektrischen Aktuator erfolgt.

11. Wägevorrichtung nach einem oder mehreren der Ansprüche 1 bis 10, wobei die Wägevorrichtung einen Sensor zur Detektion des transportierten Stückguts auf dem Bandförderer und der Anordnung über den Auflageverlängerungen aufweist.

12. Wägevorrichtung nach einem oder mehreren der Ansprüche 1 bis 11, wobei die Hubbewegung geführt wird, insbesondere durch eine Führung ausgewählt aus der Gruppe bestehend aus Kugelführung, Reibführung, Säulenkugelführung und deren Kombinationen.

13. Wägevorrichtung nach einem oder mehreren der Ansprüche 1 bis 12, wobei die Wägevorrichtung zweit, drei oder vier Waagen aufweist.

14. Wägevorrichtung nach einem oder mehreren der Ansprüche 1 bis 12, wobei die Waage eingehaust und gegen Störeinflüsse geschützt ist.

15. Verfahren zur Wägung von Stückgut mit einer Vorrichtung nach einem der vorstehenden Patentansprüche mit den Schritten
- Transportieren des zu wägenden Stückguts bis zu einer geeigneten Position über den Auflageverlängerungen;
- Stoppen des Bandförderers;
- Absenken des Stückguts auf die Auflageverlängerungen durch Verringerung der Spannung der Transportbänder oder durch zumindest teilweises Absenken des Bandförderers;
- Feststellen des Gewichts des Stückguts durch dessen Krafteinwirkung auf eine Waage;
- Anheben des Stückguts von den Auflageverlängerungen durch Erhöhen der Spannung der Transportbänder oder durch zumindest teilweises Anheben des Bandförderers;
- Abtransportieren des Stückguts.

16. Verwendung der Wägevorrichtung nach einem oder mehreren der Ansprüche 1 bis 14 in einem Verfahren zur Herstellung von Autoabgaskatalysatoren.
